# EUROPÄISCHE PATENTSCHRIFT

(11) **EP 2 097 477 B1**
(45) Veröffentlichungstag und Bekanntmachung des Hinweises auf die Patenterteilung: **20.04.2011**
(21) Anmeldenummer: 07846556.4
(22) Anmeldetag: 10.11.2007
(51) Int. Cl.: C08K 7/26

(54) **SCHLAGZÄHMODIFIZIERTE GEFÜLLTE POLYCARBONAT-ZUSAMMENSETZUNGEN**
FILLED POLYCARBONATE COMPOSITIONS WITH MODIFIED RESILIENCE
COMPOSITIONS DE POLYCARBONATE CHARGÉES ET MODIFIÉES CHOC

(30) Priorität: 24.11.2006 DE 102006055479
(43) Veröffentlichungstag der Anmeldung: 09.09.2009
(73) Patentinhaber: Bayer MaterialScience AG, 51368 Leverkusen (DE)
(72) Erfinder: ECKEL, Thomas, 41540 Dormagen (DE); FELDERMANN, Achim, 40477 Düsseldorf (DE); THUERMER, Burkhard, 53332 Bornheim (DE); BUCHHOLZ, Vera, 50823 Köln (DE)
(86) Internationale Anmeldenummer: PCT/EP2007/009742
(87) Internationale Veröffentlichungsnummer: WO 2008/061643

(56) Entgegenhaltungen:
- JP-A- 6 345 953
- JP-A- 2001 072 853
- US-A- 4 243 575

## Beschreibung

Die vorliegende Erfindung betrifft schlagzähmodifizierte gefüllte Polycarbonat-Zusammensetzungen und Formmassen, die erhöhten Anforderungen an mechanischen Eigenschaftsprofil erfüllen und ein verbessertes Fließverhalten bei der Verarbeitung aufweisen, ein Verfahren zu ihrer Herstellung und ihre Verwendung zur Herstellung von Formkörpern.

In EP-A 198 648 werden thermoplastische Formmassen offenbart, die einen kugelförmigen hohlen Füllstoff enthalten mit einer Teilchengröße kleiner 500 µm. Der Füllstoff hat ein Verhältnis von äußeren Durchmesser zu Wanddicke von 2,5 - 10 und führt zu einer Erhöhung der Steifigkeit und Festigkeit bei niedrigem Gewicht. Die Kratzfestigkeit oder Fließfähigkeit solcher Formmassen wird nicht beschrieben.

EP-A 391 413 beschreibt die Verwendung von Talk als Füllstoff in schlagzähmodifizierten Polycarbonat. Ein Einfluss auf die Kratzfestigkeit oder die Verarbeitungsschwindung wird nicht beschrieben.

Hochkratzfeste Formmassen sind bekannt. Beispielsweise werden in DE-A 2 721 887 Formmassen aus einem Thermoplasten und Vollglaskugeln offenbart. Folien aus diesem Material haben eine gute Lichtdurchlässigkeit und Kratzfestigkeit. Über die Fließfähigkeit, Steifigkeit oder Verarbeitungsschwindung dieser Formmassen wird nichts berichtet.

JP-A 01-104637 beschreibt Mischungen aus kristallinem Polypropylen und modifiziertem Polypropylen, denen hohle Partikel aus AlO₃-SiO₂ zugegeben wurden. Im Vergleich zu einer entsprechenden Mischung mit Talk wurde durch diese Partikel eine verbesserte Kratzfestigkeit bei verringertem Biegemodul erhalten.

Aufgabe der vorliegenden Erfindung ist die Bereitstellung einer Formmasse, welche sich durch eine hohe Fließfähigkeit (gemessen als MVR) und durch eine gute Chemikalienbeständigkeit (ESC-Verhalten) bei unverändert hoher Kratzfestigkeit auszeichnen. Bevorzugt sollen die Formmassen flammwidrig sein und die Anforderungen UL94 mit V-0 auch bei dünnen Wandstärken (d.h. Wandstärke von 1,5 mm) erfüllen.

Es wurde überraschend gefunden, dass Zusammensetzungen enthaltend
- A): 10 - 90 Gew.-Teile, bevorzugt 50 - 85 Gew.-Teile aromatisches Polycarbonat und/oder aromatisches Polyestercarbonat,
- B): 0,5 - 30 Gew.-Teile, bevorzugt 1 - 25 Gew.-Teile, besonders bevorzugt 2 - 20 Gew.-Teile kautschukmodifiziertes Pfropfpolymerisat,
- C): 0,1 - 50 Gew.-Teile, bevorzugt 0,3 - 30 Gew.-Teile, besonders bevorzugt 0,5 - 20 Gew.- Teile hohle Keramikkugeln, wobei die hohlen Keramikkugeln eine spezifische Dichte von 2- 3 g/cm³ aufweisen,
- D): 0 - 20 Gew.-Teile, bevorzugt 1 - 18 Gew.-Teile, besonders bevorzugt 2 - 16 Gew.-Teile phosphorhaltiges Flammschutzmittel,
- E): 0 - 40 Gew.-Teile, bevorzugt 1 - 30 Gew.-Teile Vinyl(Co)Polymerisat (E.1) und/oder Polyalkylenterephthalat (E.2),
- F): 0 - 10 Gew.-Teile, bevorzugt 0,5 - 5 Gew.-Teile Zusatzstoffe,
wobei alle Gewichtsteilangaben in der vorliegenden Anmeldung so normiert sind, dass die Summe der Gewichtsteile aller Komponenten A+B+C+D+E+F in der Zusammensetzung 100 ergeben, das gewünschte Eigenschaftsprofil aufweisen.

### Komponenten A

Erfindungsgemäß geeignete aromatischec Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 007 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 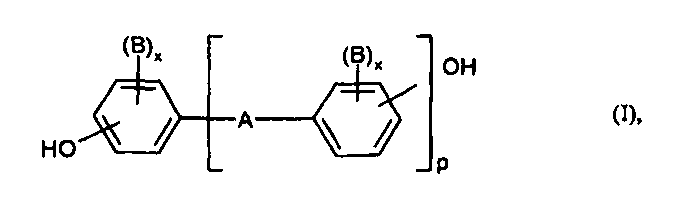 wobei
- A: eine Einfachbindung, C₁ bis C₅-Alkylen, C₂ bis C₅-Alkyliden, C₅ bis C₆-Cycloalkyliden, - O-, -SO-, -CO-, -S-, -SO₂-, C₆ bis C₁₂-Arylen, an das weitere aromatische gegebenenfalls Heteroatome enthaltende Ringe kondensiert sein können, oder ein Rest der Formel (II) oder (III) 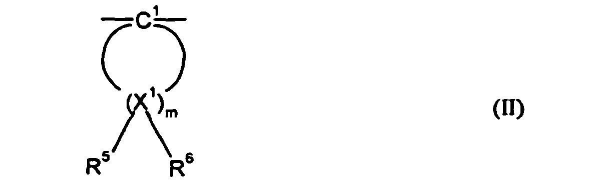 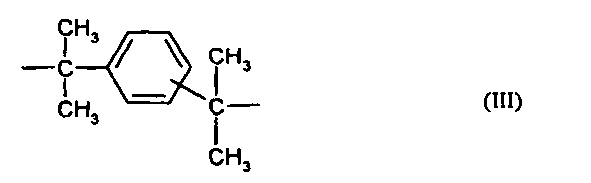
- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆ Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate. Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A). Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch GPC, Ultrazentrifuge oder Streulichtmessung) von 10.000 bis 200.000 g/mol, vorzugsweise 15.000 bis 80.000 g/mol, besonders bevorzugt 24.000 bis 32.000 g/mol.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch **I** bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.
Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Bei der Herstellung von aromatischen Polyestercarbonaten kann zusätzlich eine oder mehrere aromatische Hydroxycarbonsäure eingesetzt werden.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1- Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt werden; Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden.

### Komponente B

Die Komponente B umfasst ein oder mehrere Pfropfpolymerisate von
- B.1: 5 bis 95, vorzugsweise 30 bis 90 Gew.-%, wenigstens eines Vinylmonomeren auf
- B.2: 95 bis 5, vorzugsweise 70 bis 10 Gew.-% einer oder mehrerer Pfropfgrundlagen mit Glasübergangstemperaturen < 10°C, vorzugsweise < 0°C, besonders bevorzugt < -20°C.

Die Pfropfgrundlage B.2 hat im allgemeinen eine mittlere Teilchengröße (d₅₀-Wert) von 0,05 bis 10 µm, vorzugsweise 0,1 bis 5 µm, besonders bevorzugt 0,2 bis 1 µm.

Monomere B.1 sind vorzugsweise Gemische aus
- B.1.1: 50 bis 99 Gew.-Teilen Vinylaromaten und/oder kemsubstituierten Vinylaromaten (wie Styrol, α-Methylstyrol, p-Methylstyrol, p-Chlorstyrol) und/oder (Meth)Acrylsäure-(C₁- C₈)-Alkylester, wie Methylmethacrylat, Ethylmethacrylat), und
- B.1.2: 1 bis 50 Gew.-Teilen Vinylcyanide (ungesättigte Nitrile wie Acrylnitril und Methacrylnitril) und/oder (Meth)Acrylsäure-(C₁-C₈)-Alkylester, wie Methyl- methacrylat, n-Butylacrylat, t-Butylacrylat, und/oder Derivate (wie Anhydride und Imide) ungesättigter Carbonsäuren, beispielsweise Maleinsäureanhydrid und N-Phenyl- Maleinimid.

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat. Besonders bevorzugte Monomere sind B.1.1 Styrol und B.1.2 Acrylnitril.

Für die Pfropfpolymerisate B geeignete Pfropfgrundlagen B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen B.2 sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, dass die Glasübergangstemperatur der Komponente B.2 unterhalb < 10°C, vorzugsweise < 0°C, besonders bevorzugt < -10°C liegt. Besonders bevorzugt ist reiner Polybutadienkautschuk.

Besonders bevorzugte Polymerisate B sind beispielsweise ABS-Polymerisate (Emulsions-, Masse- und Suspensions-ABS), wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind. Der Gelanteil der Pfropfgrundlage B.2 beträgt mindestens 30 Gew.-%, vorzugsweise mindestens 40 Gew.-% (in Toluol gemessen).

Die Pfropfcopolymerisate B werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die im Emulsionspolymerisationsverfahren durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß B.2 der Polymerisate B sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören C₁ bis C₈-Alkylester, beispielsweise Methyl-, Ethyl-, Butyl-, n-Octyl- und 2-Ethylhexylester; Halogenalkylester, vorzugsweise Halogen-C₁-C₈-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage B.2. Bei cyclischen vernetzenden Monomeren mit mindestens drei ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropfgrundlagen gemäß B.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

### Komponente C

Die erfindungsgemäße Formmassen enthalten als Komponente C hohle Keramikkugeln, vorzugsweise hohle Silizium-Aluminium-Keramikkugeln. Bevorzugte hohle Keramikkugeln weisen einen Anteil an Al₂O₃ von 15 bis 45 Gew.-%, vorzugsweise von 20 bis 35 Gew.-% auf.

Die hohlen Keramikkugeln weisen eine spezifische Dichte von 2 - 3 g/cm³, vorzugsweise 2,2 - 2,6 g/cm³ auf. Besonders bevorzugte hohle Keramikkugeln haben eine Druckfestigkeit von 50 - 700 MPa, bevorzugt 200 - 500 MPa. Bei der angegebenen Druckfestigkeit handelt es sich um die Festigkeit gegenüber einem isostatischen Druck, bei dem 80% der Kugeln unbeschädigt bleiben, wenn sie dem genannten Druck in einer Flüssigkeitssäule ausgesetzt werden.

Die hohlen Keramikkugeln weisen vorzugsweise einen mittleren Teilchendurchmesser (d₅₀) von 0,5 - 100 µm, bevorzugt 1 - 50 µm, besonders bevorzugt 5 - 30 µm auf.

Die hohlen Keramikkugeln können oberflächenbehandelt, z.B. silanisiert sein, um eine bessere Verträglichkeit mit dem Polymer zu gewährleisten.

### Komponente D

Phosphorhaltige Flammschutzmittel (D) im erfindungsgemäßen Sinne sind bevorzugt ausgewählt aus den Gruppen der Mono- und oligomeren Phosphor- und Phosphonsäureester, Phosphonatamine und Phosphazene, wobei auch Mischungen von mehreren Komponenten ausgewählt aus einer oder verschiedenen dieser Gruppen als Flammschutzmittel zum Einsatz kommen können. Auch andere hier nicht speziell erwähnte halogenfreie Phosphorverbindungen können alleine oder in beliebiger Kombination mit anderen halogenfreien Phosphorverbindungen eingesetzt werden.

Bevorzugte Mono- und oligomere Phosphor- bzw. Phosphonsäureester sind Phosphorverbindungen der allgemeinen Formel (IV) 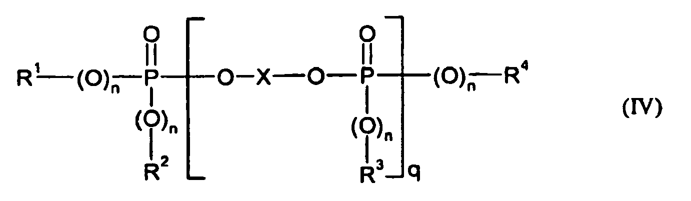 worin
- R¹, R², R³ und R⁴,: unabhängig voneinander jeweils gegebenenfalls halogeniertes C₁ bis C₈-Alkyl, jeweils gegebenenfalls durch Alkyl, vorzugsweise C₁ bis C₄-Alkyl, und/oder Halogen, vorzugsweise Chlor, Brom, substituiertes C₅ bis C₆-Cycloalkyl, C₆ bis C₂₀-Aryl oder C₇ bis C₁₂-Aralkyl,
- n: unabhängig voneinander, 0 oder 1,
- q: 0 bis 30 und
- X: einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

Bevorzugt stehen R¹, R², R³ und R⁴ unabhängig voneinander für C₁ bis C₄-Alkyl, Phenyl, Naphthyl oder Phenyl-C₁-C₄-alkyl. Die aromatischen Gruppen R¹, R², R³ und R⁴ können ihrerseits mit Halogen- und/oder Alkylgruppen, vorzugsweise Chlor, Brom und/oder C₁ bis C₄-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.
- X: in der Formel (IV) bedeutet bevorzugt einen ein- oder mehrkernigen aromatischen Rest mit 6 bis 30 C-Atomen. Dieser leitet sich bevorzugt von Diphenolen der Formel (I) ab.

- n: in der Formel (IV) kann, unabhängig voneinander, 0 oder 1 sein, vorzugsweise ist n gleich 1.
- q: steht für Werte von 0 bis 30, bevorzugt 0,3 bis 20, besonders bevorzugt 0,5 bis 10, insbe- sondere 0,5 bis 6, ganz besonders bevorzugt 1,1 bis 1,6.
- X: steht besonders bevorzugt für 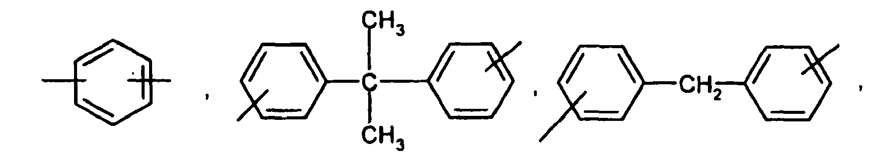 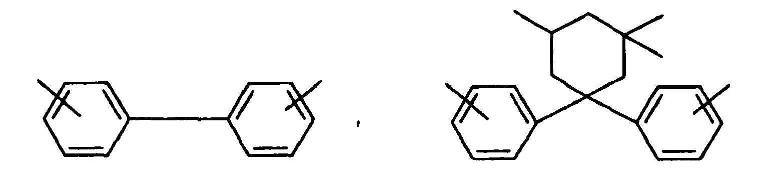
oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Als erfindungsgemäße Komponente D können auch Mischungen verschiedener Phosphate eingesetzt werden.

Phosphorverbindungen der Formel (TV) sind insbesondere Tributylphosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, Resorcin verbrücktes Oligophosphat und Bisphenol A verbrücktes Oligophosphat. Der Einsatz von oligomeren Phosphorsäureestern der Formel (IV), die sich vom Bisphenol A ableiten, ist insbesondere bevorzugt.

Höchst bevorzugt als Komponente D ist Bisphenol-A basierendes Oligophosphat gemäß Formel (IVa).

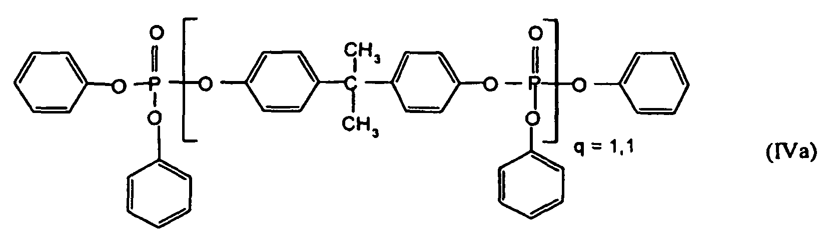

Die Phosphorverbindungen gemäß Komponente D sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Wenn Mischungen verschiedener Phosphorverbindungen eingesetzt werden und im Fall von oligomeren Phosphorverbindungen, handelt es sich bei dem angegebenen q-Wert um den mittleren q-Wert. Der mittlere q-Wert kann bestimmt werden, indem mittels geeigneter Methode (Gaschromatographie (GC), High Pressure Liquid Chromatography (HPLC), Gelpermeationschromatographie (GPC)) die Zusammensetzung der Phosphorverbindung (Molekulargewichtsverteilung) bestimmt wird und daraus die Mittelwerte für q berechnet werden.

Weiterhin können Phosphonatamine und Phosphazene, wie sie in WO 00/00541 und WO 01/18105 beschrieben sind, als Flammschutzmittel eingesetzt werden.

Die Flammschutzmittel können allein oder in beliebiger Mischung untereinander oder in Mischung mit anderen Flammschutzmitteln eingesetzt werden.

### Komponente E

Die Komponente E umfasst ein oder mehrere thermoplastische Vinyl(Co)Polymerisate E.1 und/oder Polyalkylenterephthalate E.2.

Geeignet sind als Vinyl(Co)Polymerisate E.1 Polymerisate von mindestens einem Monomeren aus der Gruppe der Vinylaromaten, Vinylcyanide (ungesättigte Nitrile), (Meth)Acrylsäure-(C₁-C₈)-Alkylester, ungesättigte Carbonsäuren sowie Derivate (wie Anhydride und Imide) ungesättigter Carbonsäuren. Insbesondere geeignet sind (Co)Polymerisate aus
- E.1.1: 50 bis 99, vorzugsweise 60 bis 80 Gew.-Teilen Vinylaromaten und/oder kernsubstituierten Vinylaromaten wie Styrol, α-Methylstyrol, p-Methylstyrol, p-Chlorstyrol) und/oder (Meth)Acrylsäure-(C₁-C₈)-Alkylester, wie Methylmethacrylat, Ethylmethacrylat), und
- E.1.2: 1 bis 50, vorzugsweise 20 bis 40 Gew.-Teilen Vinylcyanide (ungesättigte Nitrile) wie Acryl-nitril und Methacrylnitril und/oder (Meth)Acryl-säure-(C₁-C₈)-Alkylester, wie Methylmeth-acrylat, n-Butylacrylat, t-Butylacrylat, und/oder ungesättigte Carbonsäuren, wie Maleinsäure, und/oder Derivate, wie Anhydride und Imide, ungesättigter Carbonsäuren, beispielsweise Maleinsäureanhydrid und N-Phenylmaleinimid).

Die Vinyl(co)polymerisate E.1 sind harzartig, thermoplastisch und kautschukfrei. Besonders bevorzugt ist das Copolymerisat aus E.1.1 Styrol und E.1.2 Acrylnitril.

Die (Co)Polymerisate gemäß E.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte Mw (Gewichtsmittel, ermittelt durch Lichtstreuung oder Sedimentation) zwischen 15.000 und 200.000.

Die Polyalkylenterephthalate der Komponente E.2 sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Mol-%, bezogen auf die Diolkomponente Ethylenglykol- und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-ß-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestem) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichiorbenzol (1:1 Gewichtsteite) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

### Weitere Zusatzstoffe F

Die Zusammensetzung kann weitere übliche Polymeradditive wie Flammschutzsynergisten, Antidrippingmittel (beispielsweise Verbindungen der Substanzklassen der fluorierten Polyolefine, der Silikone sowie Aramidfasern), Gleit- und Entformungsmittel (beispielsweise Pentaerythrittetrastearat), Nukleiermittel, Stabilisatoren, Antistatika (beispielsweise Leitruße, Carbonfasern, Carbon Nanotubes sowie organische Antistatika wie Polyalkylenether, Alkyl Sulfonate oder Polyamid-haltige Polymere) sowie Farbstoffe und Pigmente enthalten.

### Herstellung der Formmassen und Formkörper

Die erfindungsgemäßen thermoplastischen Formmassen werden hergestellt, indem man die jeweiligen Bestandteile in bekannter Weise vermischt und bei Temperaturen von 200°C bis 300°C in üblichen Aggregaten wie Innenkneter, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung sind ebenfalls Verfahren zur Herstellung der Formmassen und die Verwendung der Formmassen zur Herstellung von Formkörpern.

Die erfindungsgemäßen Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen sowie Karrosserie- bzw. Innenbauteile für Nutzfahrzeuge, insbesondere für den Automobilbereich.

Insbesondere können die erfindungsgemäßen Formmassen beispielsweise auch zur Herstellung von folgenden Formkörpern oder Formteilen verwendet werden: Innenausbauteile für Schienenfahrzeuge, Schiffe, Flugzeuge, Busse und andere Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

Die folgenden Beispiele dienen der weiteren Erläuterung der Erfindung.

### Beispiele

### Komponente A1

Lineares Polycarbonat auf Basis Bisphenol-A mit einem gewichtsgenittelten Molekulargewicht M̅_{w} von 27500 g/mol (bestimmt durch GPC).

### Komponente A2

Lineares Polycarbonat auf Basis Bisphenol-A mit einem gewichtsgemittelten Molekulargewicht M̅_{w} von 25000 g/mol (bestimmt durch GPC).

### Komponente B1

ABS-Polymerisat, hergestellt durch Emulsions-Polymerisation von 43 Gew.-% (bezogen auf das ABS-Polymerisat) einer Mischung aus 27 Gew.-% Acrylnitril und 73 Gew.-% Styrol in Gegenwart von 57 Gew.-% (bezogen auf das ABS-Polymerisat) eines teilchenförmig vernetzten Polybutadienkautschuks (mittlerer Teilchendurchmesser d₅₀ = 0,35 µm).

### Komponente C1

Hohle Keramikkugeln bestehend aus Silizium-Aluminium Keramik mit einem Anteil an Al₂O₃ von 24,6 Gew.-%. Die hohlen Keramikkugeln weisen eine spezifische Dichte von 2,5 g/cm³ auf und besitzen eine isostatische Druckfestigkeit von 420 MPa. Die Kugeln haben einen mittleren Teilchendurchmesser von 4 µm.

### Komponente C2

Glasvollkugeln Vitrolite 20 der VitroCo Enterprises (Irvine, CA, USA). Dieser Füllstoff besteht aus amorphen Silikaten und Alumosilikaten von Natrium, Kalium, Calcium, Magnesium und Eisen und hat einen mittleren Durchmesser von 12 µm

### Komponente C3

Talk, Luzenac^{®} A3C der Firma Luzenac Naintsch Mineralwerke GmbH mit einem MgO-Gehalt von 32 Gew.-%, einem SiO₂-Gehalt von 61 Gew.-% und einem Al₂O₃-Gehalt von 0,3 Gew.-%.

### Komponente D

Bisphenol-A basierendes Oligophosphat (Reofoss BAPP)

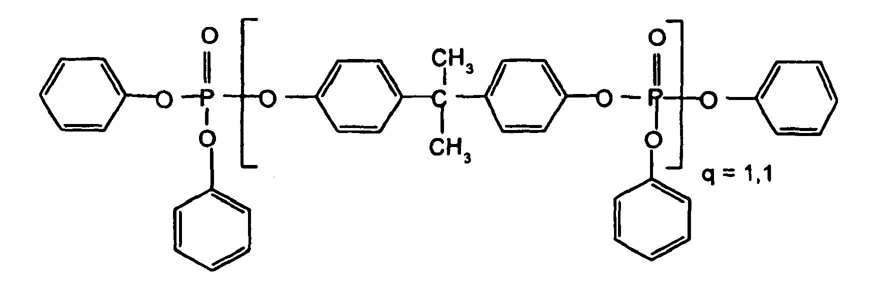

### Komponente E1

Copolymerisat aus 77 Gew.-% Styrol und 23 Gew.-% Acrylnitril mit einem gewichtsgemittelten Molekulargewicht M_{w} von 130 kg/mol (bestimmt durch GPC), hergestellt nach dem Masseverfahren.

### Komponente E2

Copolymerisat aus 72 Gew.-% Styrol und 28 Gew.-% Acrylnitril mit einem gewichtsgemittelten Molekulargewicht M_{w} von 140 kg/mol (bestimmt durch GPC), hergestellt nach dem Masseverfahren.

### Komponente F

- **F1:**: Polytetrafluorethylen-Pulver, CFP 6000 N, Fa. Du Pont.
- **F2:**: Pentaerythrittetrastearat als Gleit-/Entformungsmittel
- **F3**: Phosphitstabilisator, Irganox^{®} B 900, Fa. Ciba Speciality Chemicals

### Herstellung und Prüfung der Formmassen

Auf einem Zweischneckenextruder (ZSK-25) (Fa. Werner und Pfleiderer) werden die in Tabelle 1 aufgeführten Einsatzstoffe bei einer Drehzahl von 225 Upm und einem Durchsatz von 20 kg/h bei einer Maschinentemperatur von 260°C compoundiert und granuliert. Die fertigen Granulate werden auf einer Spritzgussmaschine zu den entsprechenden Probekörpern verarbeitet (Massetemperatur 240°C (Beispiele 3-5) bzw. 260°C (Beispiele 1-2), Werkzeugtemperatur 80°C, Fließfrontgeschwindigkeit 240 mm/s).

Zur Charakterisierung der Eigenschaften der Probekörper werden folgende Methoden angewandt:

Die Fließfähigkeit wurde nach DIN EN ISO 1133 als Schmelze-Volumen-Fließrate (melt volumeflow rate, MVR) sowie ggf. anhand der ISO 11443 als Schmelzeviskosität bestimmt.

Reißfestigkeit wird gemessen nach DIN EN ISO 527.

Die Steifigkeit wird gemessen als Zug-E-Modul nach DIN EN ISO 527.

Die Kratzfestigkeit wird gemäß ASTM D-3363 als Bleistifthärte bestimmt. Dabei werden Bleistifte der Härte 3H, 2H, H, F, HB, B, 2B und 3B (hier Härte abnehmend) mit festgelegtem Druck über die Oberfläche geführt. Die Bleistifthärte gibt den härtesten Bleistift an, mit dem kein Kratzer auf der Oberfläche erkennbar ist.

Das Brandverhalten wird nach UL-Subj. 94V an Stäben der Abmessung 127 x 12,7 x 1,5 mm gemessen.

Das Spannungsrissverhalten (ESC-Verhalten) wird an Stäben der Abmessung 80 x 10 x 4 mm untersucht. Das jeweils verwendete Testmedium ist in Tabelle 1 bzw. Tabelle 2 angegeben. Die Probekörper werden mittels einer Kreisbogenschablone vorgedehnt (Vordehnung **εₓ** = 2,4 %) und bei Raumtemperatur im Testmedium gelagert. Das Spannungsrissverhalten wird über die Rissbildung bzw. den Bruch ("BR") beurteilt.

**Tabelle 1: Zusammensetzung und Eigenschaften der Formmassen**

| Zusammensetzung | **1** | **2 (Vgl.)** |
|---|---|---|
| [Gew.-%] | | |
| **A1** | 56,3 | 56,3 |
| **B1** | 16,2 | 16,2 |
| **C1** | 4,8 | - |
| **C2** | - | 4,8 |
| **E1** | 5,7 | 5,7 |
| **E2** | 16,2 | 16,2 |
| **F2** | 0,7 | 0,7 |
| **F3** | 0,1 | 0,1 |
| **MVR** (260°C/5kg) [cm³/10min] | 13,6 | 12,6 |
| **Kratzfestigkeit** gem. ASTM D-3363 | F | F |
| **Spannungsrissbeständigkeit (ESC-Verhalten)** | BR | BR |
| Rapsöl 2,4 % | 4,3 Std | 3,0 Std |
| **Zug E-Modul** [N/mm] | 2316 | 2261 |

Aus Tabelle 1 geht hervor, dass die erfindungsgemäße Zusammensetzung gemäß Beispiel 1 gegenüber der Zusammensetzung des Vergleichsbeispiels 2 ein verbessertes ESC-Verhalten und eine verbesserte Fließfähigkeit bei guter Kratzfestigkeit aufweist.

Bei den flammgeschützten Zusammensetzungen der Tabelle 2 erfüllt nur die erfindungsgemäße Zusammensetzung gemäß Beispiel 3 die erfindungsgemäße Aufgabe, d.h. bei vergleichbarer Kratzfestigkeit (gegenüber Vergleichsbeispiel 4) wird eine verbessertes ESC-Verhalten und eine verbesserte Fließfähigkeit erreicht. Vergleichsbeispiel 5 mit Talk als Füllstoff erfüllt nicht das Kriterium der hohen Kratzfestigkeit. Darüber hinaus zeigt Beispiel 3 das beste Brandverhalten (Bewertung V0 bei der kürzesten Nachbrennzeit (29 s) im Vergleich zu den Vergleichsbeispielen 4 und 5).

**Tabelle 2: Zusammensetzung und Eigenschaften der flammgeschützten Formmassen**

| Zusammensetzung [Gew.-%] | **3** | **4 (Vgl.)** | **5 (Vgl.)** |
|---|---|---|---|
| **A2** | 61,2 | 61,2 | 61,2 |
| **B1** | 8,6 | 8,6 | 8,6 |
| **C1** | 4,8 | - | - |
| **C2** | - | 4,8 | - |
| **C3** | - | - | 4,8 |
| **D** | 14,4 | 14,4 | 14,4 |
| **E1** | 10,0 | 10,0 | 10,0 |
| **F1** | 0,5 | 0,5 | 0,5 |
| **F2** | 0,4 | 0,4 | 0,4 |
| **F3** | 0,1 | 0,1 | 0,1 |
| **Schmelzeviskosität** [Pas] | | | |
| 1 000s- 1/240°C | 208 | 217 | 209 |
| 1 000s- 1/260°C | 138 | 151 | 144 |
| 1000s-1/280°C | 84 | 97 | 92 |
| **MVR** (240°C/5kg) [cm³/10min] | 24,9 | 22,0 | 20,9 |
| **Zug-E-Modul** [N/mm] | 2996 | 2920 | 3300 |
| **Reißdehnung** [%] | 15,5 | 13,8 | 11,8 |
| **Kratzfestigkeit** gem. ASTM D-3363 | H | H | F |
| **Spannungsrissbeständigkeit (ESC-Verhalten)** | | | |
| 1) Toluol/Isopropanol 2,4% | oB¹⁾ 10 min | oB¹⁾ 10 min | BR 8 Min |
| 2) Hydrauliköl 2,4% | BR 64,5 Std | BR 7,9 Std | BR 7,5 Std |
| 3) Rapsöl 2,4% | BR 13 Min | BR 2,5 Min | BR 2,5 Min |
| **Brandverhalten (UL 94V)** / **Gesamtnachbrennzeit** | V0/29s | V1/55s | V0/34s |

| | | | |
|---|---|---|---|
| 1) ohne Bruch nach 10 min. | | | |

## Patentansprüche

1. Zusammensetzungen enthaltend
A) 10 - 90 Gew.-Toile aromatisches Polycarbonat und/oder aromatisches Poly- estercarbonat,
B) 0,5 - 30 Gew.-Teile kautschukmodifiziertes Pfropfpolymerisat.
C) 0,1 - 50 Gew.-Teile hohle Keramikkugeln, wobei die hohlen Keramikkugeln eine spezifische Dichte von 2 - 3 g/cm³ aufweisen.
D) 0 - 20 Gew.-Teile phosphorhaltiges Flammschutzmittel,
E) 0 - 40 Gew.-Teile Vinyl(Co)Folymerisat und/oder Polyalkylenterephthalat,
F) 0 -10 Gew.-Teile Zusatzstoff.

2. Zusammensetzungen nach Anspruch 1, wobei die hohlen Keramikkugeln einen Al₂O₃-Anteil von 15 bis 45 Gew.-% aufweisen.

3. Zusammensetzungen nach einem der Ansprüche 1 bis 2, wobei die hohlen Keramikkugeln eine Druckfestigkeit von 50 - 700 MPa aufweisen.

4. Zusammensetzungen nach einem der Ansprüche 1 bis 3 enthaltend phosphorhaltiges Flammschutzmittel (D) der allgemeinen Formel (IV) 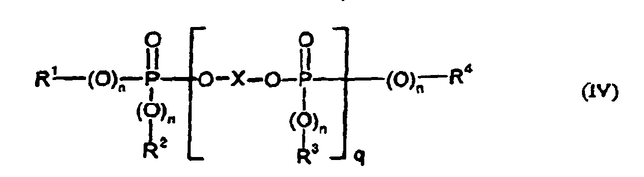 worin
R¹, R², R³ und R⁴, unabhängig voneinander jeweils gegebenenfalls halogeniertes C₁ bis C₈-Alkyl, jeweils gegebenenfalls durch Alkyl, vorzugsweise C₁ bis C₄-Alkyl, und/oder Halogen, vorzugsweise Chlor, Brom, substituiertes C₅ bis C₆-Cycloalkyl. C₆ bis C₂₀-Aryl oder C₇ bis C₁₂-Aralkyl,
n unabhängig voneinander, 0 oder 1
q 0 bis 30 und
X einen ein- oder mehrkernigen aromatischen Rest mit 6 bis 30 C-Atomen, oder einen linearen oder verzweigten aliphatischen Rest mit 2 bis 30 C-Atomen, der OH-substituiert scin und bis zu 8 Etherbindungen enthalten kann, bedeuten.

5. Zusammensetzungen gemäß Anspruch 4, worin X in Formel (IV) für Bisphenol A steht

6. Zusammensetzungen nach einem der Ansprüche 1 bis 5 enthaltend als Komponente F mindestens einen Zusatzstoff ausgewählt aus der Gruppe bestehend aus Flammschutzsynergisten, Antidrippingmittel, Gleit- und Entformungsmittel, Nukleiermittel, Stabilisatoren, Antistatika, Farbstoffe und Pigmente.

7. Verwendung der Zusammensetzungen nach einem der Ansprüche 1 bis 6 zur Herstellung von spritzgegossenen oder thermogeformten Formkörpern.

8. Formkörper, enthaltend eine Zusammensetzung nach einem der Ansprüche 1 bis 6.

9. Formkörper nach Anspruch 8 **dadurch gekennzeichnet, dass** der Formkörper ein Teil eines Kraftfahrzeugs, Schienenfahrzeugs, Luftfahrzeugs oder Wasserfahrzeugs oder ein Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungm wärmeisolierte Transportbehältnisse, Formteile für Sanitär- und Badausrüstungen, Abdeckgitter für Lüftertiffnungen oder ein Gehäuse für Gartengeräte ist.

## Claims

1. Compositions comprising
A) from 10 to 90 parts by weight of aromatic polycarbonate and/or aromatic polyester carbonate,
B) from 0.5 to 30 parts by weight of rubber-modified graft polymer,
C) from 0.1 to 50 parts by weight of hollow ceramic beads, where the density of the hollow ceramic beads is from 2 to 3 g/cm³,
D) from 0 to 20 parts by weight of phosphorus- containing flame retardant,
E) from 0 to 40 parts by weight of vinyl (co)polymer and/or polyalkylene terephthalate,
F) from 0 to 10 parts by weight of additives.

2. Compositions according to Claim 1, where the hollow ceramic beads have from 15 to 45% by weight Al₂O₃ content.

3. Compositions according to Claims 1 to 2, where the compressive strength of the hollow ceramic beads is from 50 to 700 MPa.

4. Compositions according to any of Claims 1 to 3 comprising phosphorus-containing flame retardant (D) of the general formula (IV) 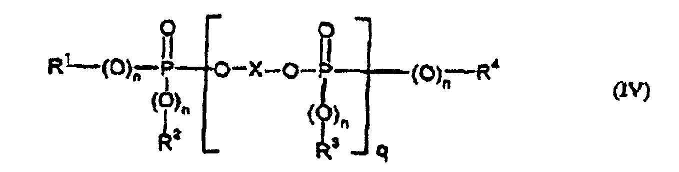 in which
R¹, R², R³ and R⁴ are mutually independently respectively optionally halogenated C₁-C₈-alkyl, respectively optionally alkyl-, preferably C₁-C₄-alkyl-, and/or halogen-, preferably chlorine- or bromine- substituted C₅-C₆-cycloalkyl, C₆-C₂₀-aryl or C₇-C₁₂- aralkyl,
n is mutually independently 0 or 1
q is from 0 to 30 and
X is a mono- or polynuclear aromatic moiety having from 6 to 30 carbon atoms, or a linear or branched aliphatic moiety having from 2 to 30 carbon atoms, which can have OH-substitution and can comprise up to 8 ether bonds.

5. Compositions according to Claim 4, in which X in formula (IV) represents bisphenol A.

6. Compositions according to any of Claims 1 to 5 comprising, as component F, at least one additive selected from the group consisting of flame retardant synergists, antidrip agents, lubricants and mould-release agents, nucleating agents, stabilizers, antistatic agents, dyes and pigments.

7. Use of the compositions according to any of Claims 1 to 6 for producing injection mouldings or thermoformed mouldings.

8. Moulding comprising a composition according to any of Claims 1 to 6.

9. Moulding according to Claim 8, **characterized in that** the moulding is a part of a motor vehicle, of a rail vehicle, of an aircraft or of a water vehicle, or is a housing of electrical devices comprising small transformers, a housing for devices for the processing and transmission of information, a housing or cladding of medical devices, or is a massage device or a housing for the same, a toy vehicle for children, a flat wall element, a housing for security/safety equipment, a thermally insulated transport container, a moulding for sanitary and bath equipment, a protective grille for ventilator openings or a housing for garden equipment.

## Revendications

1. Compositions contenant
A) 10-90 parties en poids de polycarbonate aromatique et/ou de polyestercarbonate aromatique,
B) 0,5-30 parties en poids de polymère greffé modifié par un caoutchouc,
C) 0,1-50 parties en poids de billes creuses en céramique, où les billes creuses en céramique présentent une densité spécifique de 2-3 g/cm³,
D) 0-20 parties en poids d'agent ignifuge contenant du phosphore,
E) 0-40 parties en poids de (co)polymère de vinyle et/ou de poly(téréphtalate d'alkylène)
F) 0-10 parties en poids d'additifs.

2. Compositions selon la revendication 1, où les billes creuses en céramique présentent une proportion d'Al₂O₃ de 15 à 45% en poids.

3. Compositions selon l'une quelconque des revendications 1 à 2, où les billes creuses en céramique présentent une résistance à la compression de 50-700 MPa.

4. Compositions selon l'une quelconque des revendications 1 à 3 contenant des agents ignifuges contenant du phosphore (D) de formule générale (IV) 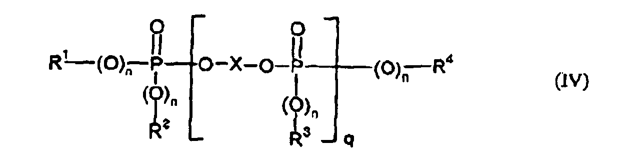 où
R¹, R², R³ et R⁴, signifient, indépendamment l'un de l'autre, chacun C₁ à C₈-alkyle le cas échéant halogéné, chacun C₅ à C₆-cycloalkyle, C₆ à C₂₀-aryle ou C₇ à C₁₂-aralkyle, le cas échéant substitués par alkyle, de préférence C₁ à C₄-alkyle, et/ou par halogène, de préférence chlore, brome
n indépendamment l'un de l'autre, valent 0 et 1
q vaut 0 à 30 et
X signifie un radical aromatique à un ou plusieurs noyaux comprenant 6 à 30 atomes de carbone ou un radical aliphatique linéaire ou ramifié comprenant 2 à 30 atomes de carbone, qui peut être substitué par OH et contenir jusqu'à 8 liaisons éther.

5. Compositions selon la revendication 4, dans lesquelles X dans la formule (IV) représente le bisphénol A.

6. Compositions selon l'une quelconque des revendications 1 à 5, contenant comme composant F au moins un additif choisi dans le groupe constitué par les synergistes ignifuges, les agents anti-goutte, les agents lubrifiants et de démoulage, les agents de nucléation, les stabilisateurs, les antistatiques, les colorants et les pigments.

7. Utilisation des compositions selon l'une quelconque des revendications 1 à 6 pour la fabrication de corps façonnés moulés par injection ou thermoformés.

8. Corps façonné contenant une composition selon l'une quelconque des revendications 1 à 6.

9. Corps façonné selon la revendication 8, **caractérisé en ce que** le corps façonné est une partie d'un véhicule à moteur, d'un véhicule ferroviaire, d'un aéronef ou d'un bateau ou un châssis d'appareils électriques contenant de petits transformateurs, des châssis pour des appareils de traitement et de transfert d'informations, des châssis et l'habillage d'appareils médicaux, des appareils de massage et leurs châssis, des petites voitures pour enfants, des éléments de paroi plats, des châssis pour dispositifs de sécurité, des récipients de transport thermo-isolés, des pièces façonnées pour équipements sanitaires et de bains, des grilles de protection pour bouches d'aération ou un châssis pour appareils de jardinage.
